# EUROPÄISCHE PATENTANMELDUNG

(11) **EP 0 739 896 A2**
(43) Veröffentlichungstag der Anmeldung: **30.10.1996**
(21) Anmeldenummer: 96105670.2
(22) Anmeldetag: 11.04.1996
(51) Int. Cl.: C07F 9/6571

(54) **Verfahren zur Herstellung von 6-Oxo-(6H)-dibenz-(c,e)(1,2)-oxaphosphorinen**

(30) Priorität: 24.04.1995 DE 19514946
(71) Anmelder: BAYER AG, 51368 Leverkusen (DE)
(72) Erfinder: Buysch, Hans-Josef, Dr., 47809 Krefeld (DE); Glock, Volker, Dr., 47800 Krefeld (DE)

(57) **Zusammenfassung**

Zur kontinuierlichen Herstellung von 6-Oxo-(6H)-dibenz-[c,e][1,2]-oxaphosphorinen (ODOP) werden 6-Chlor-(6H)-dibenz-[c,e][1,2]-oxaphosphorine (CDOP) mit mindestens der stöchiometrisch erforderlichen Menge Wasser kontinuierlich bei erhöhter Temperatur in einer Reaktionsstrecke mit geringer Rückvermischung umgesetzt.

## Beschreibung

Die Erfindung betrifft ein Verfahren zur kontinuierlichen Herstellung von 6-Oxo-(6H)-dibenz-[c,e][1,2]-oxaphosphorinen (ODOP) durch Umsetzung von 6-Chlor-(6H)-dibenz-[c,e][1,2]-oxaphosphorinen (CDOP) mit mindestens der stöchiometrisch erforderlichen Menge an Wasser durch kontinuierliche Umsetzung von CDOP und Wasser bei erhöhter Temperatur in einer Reaktionsstrecke mit geringer Rückvermischung und gegebenenfalls einer Behandlung des ODOP bei erhöhter Temperatur. CDOP wird hierbei in einer vorgeschalteten 1. Reaktionsstufe durch Umsetzung von o-Phenylphenolen mit PCl₃ hergestellt.

ODOP sind wichtige Additive für Polymere zum Schutz gegen oxidativen Abbau und zur Flammfestausrüstung und dienen weiterhin als Ausgangsprodukte zur Herstellung weiterer Polymeradditive.

Es ist bekannt (DE-OS 20 34 887, Beispiel 5 und 6), 6-Oxo-(6H)-dibenz[c,e][1,2] oxaphosphorine (ODOP) durch alkalische Verseifung von 6-Chlor-(6H)-dibenz[c,e][1,2] oxaphosphorinen mit Sodalösung herzustellen. Man erhält dabei in einer umständlichen Operation zunächst das Natriumsalz der Hydroxyphenyl-phenylphosphinsäure (III) in stark verunreinigter wäßrig-alkalischer Lösung, die mit Hilfe von A-Kohle gereinigt werden muß:

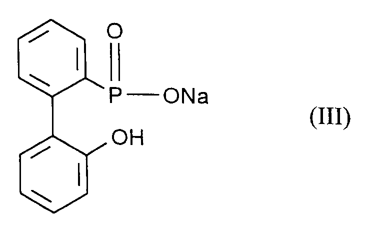

Das Natriumsalz (III) wird durch Ansäuern in die freie Säure umgewandelt. Diese kann, da sie schwerlöslich ist, aus der wäßrigen Salzlösung isoliert werden. Anschließend muß sie durch Erhitzen auf höhere Temperaturen im Vakuum in das gewünschte ODOP übergeführt werden. Dies ist ein sehr aufwendiges und wenig umweltfreundliches Verfahren, da es mit einem Anfall von Salzen und großen Abwassermengen verbunden ist.

An anderer Stelle (DE-OS 27 30 371, S. 18 und 19) wird beschrieben, daß man 130°C heißes 6-Chlor-(6H)-dibenz-oxaphosphorin mit einer großen Menge Wasser zusammenbringt, die Hydrolyse durchführt, das Wasser unter vermindertem Druck abdestilliert und dann das 6-Oxo-dibenzoxaphosphorin erhält. Die beschriebene Operation ist technisch sehr problematisch und kaum im großen Maßstab durchführbar, da bei 130°C Wasser verdampft und das Reaktionsgemisch abkühlt. Man muß daher unter erhöhtem Druck arbeiten, wenn die Temperatur von 130°C gehalten und damit eine unkontrollierte Kristallisation verhindert werden soll, denn die Zielverbindung schmilzt deutlich oberhalb des Siedepunktes von Wasser.

Nach einem weiteren Beispiel (Beispiel 3 in DE-OS 20 34 887) wird ein Rohprodukt aus der Veresterung eines o-Phenylphenols mit PCl₃ durch Aufgießen auf Eis hydrolysiert. Dabei erhält man die entsprechende Phosphinsäure, die vom Wasser abgetrennt und in einem separaten Verfahrensschritt in das entsprechende Oxaphosphorin übergeführt werden muß.

Bei den genannten Verfahren erhält man als Nebenprodukte der Oxaphosphorin-synthese verdünnte und verunreinigte Salzsäure als schwer verwendbares und zu entsorgendes Nebenprodukt sowie Salzlösungen und Abwässer.

Keins der beschriebenen Verfahren zur Herstellung von ODOP sagt etwas aus über die Ausbeute und die Reinheit des Produktes. In jedem Fall wird lediglich festgestellt, daß man das gewünschte Produkt erhalten hat.

Als Verbesserung schlägt EP 632 050 vor, das Molverhältnis CDOP zu Wasser auf genau 1:1 einzustellen und auf diese Weise große Mengen Abwasser zu vermeiden. Nach diesem Verfahren erhält man zwar sehr gute Ausbeuten, die Produktqualität läßt jedoch bezüglich des Gehaltes an Restchlor zu wünschen übrig - dies ist besonders wichtig, weil Chlorreste Korrosionen und Verfärbungen verursachen können - und die Reaktions- und damit die Belegzeiten der Reaktionsbehälter werden mit steigender Ansatzgröße lang und kostenintensiv.

Es wurde nun gefunden, daß man diese Nachteile überwindet, wenn man die Hydrolyse in einem kontinuierlich arbeitenden Reaktorsystem mit möglichst geringer Rückvermischung bei erhöhter Temperatur durchführt. Man erhält dann äußerst geringe Chlorgehalte und kurze Reaktionszeiten.

Die vorliegende Erfindung betrifft ein Verfahren zur Herstellung von 6-Oxo-(6H)-dibenz-[c,e][1,2]-oxaphosphorinen (ODOP) der Formel 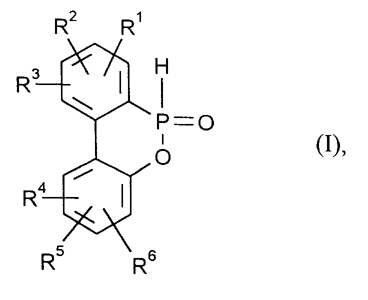 worin
- R¹ bis R⁶: gleich oder verschieden sind und Wasserstoff, Halogen, C₁-C₄-Alkyl oder C₁-C₄-Alkoxy bedeuten,
durch Umsetzen von o-Phenylphenolen der Formel 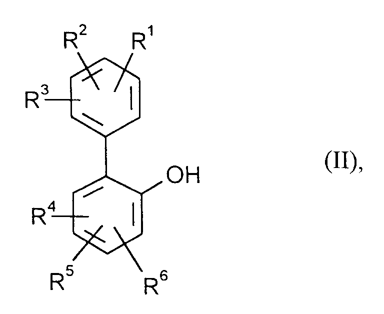 worin
- R¹ bis R⁶: die oben angegebene Bedeutung haben,
in einer 1. Stufe mit Phosphortrichlorid in Gegenwart von Lewissäuren unter Abspalten von Chlorwasserstoff bei erhöhter Temperatur im Bereich von 70 bis 220°C und Hydrolyse des Produkts der 1. Stufe in einer 2. Stufe, das dadurch gekennzeichnet ist, daß man zur Hydrolyse CDOP und Wasser in mindestens stöchiometrischem Molverhältnis kontinuierlich bei erhöhter Temperatur in eine Reaktionsstrecke mit möglichst geringer Rückvermischung einspeist, entlang dieser Reaktionsstrecke bei erhöhter Temperatur die Hydrolyse kontinuierlich durchführt, die Reaktionsprodukte am Ende der Strecke kontinuierlich austrägt und ODOP gegebenenfalls einer Nachbehandlung bei erhöhter Temperatur unterwirft.

In bevorzugter Weise werden o-Phenylphenole eingesetzt, in denen zwei der Reste R¹ bis R⁶ Wasserstoff bedeuten; in besonders bevorzugter Weise bedeuten vier der Reste R¹ bis R⁶ Wasserstoff; ganz besonders bevorzugt ist das nicht substituierte o-Phenylphenol. In jedem Falle steht in (II) an mindestens einer der zur Ausbildung des Oxaphosphorinringes benötigten Positionen des nicht OH-substituierten Benzolkernes Wasserstoff.

Die für die Hydrolyse verwendete Menge Wasser muß mindestens der eingesetzten Menge an CDOP äquivalent sein, vorzugsweise verwendet man zusätzlich einen geringen Überschuß von bis zu 1 Mol H₂O, besonders bevorzugt bis zu 0,7 Mol, ganz besonders bevorzugt von bis zu 0,5 Mol H₂O pro Mol CDOP. Die gesamte H₂O-Menge beträgt demnach pro Mol CDOP 1-2 Mol, bevorzugt 1-1,7 Mol, besonders bevorzugt 1-1,5 Mol.

Die Umsetzung kann in Gegenwart eines Lösungsmittels durchgeführt werden. Geeignet sind beispielsweise aliphatische und aromatische Kohlenwasserstoffe mit 6-15 C-Atomen, die 1 oder 2 Halogenatome tragen können, wie Methylcyclohexan, Isooctan, Isodecan, Isododecan, Isononan, Dimethylcyclohexan, Benzine wie Leichtbenzin, Dicyclopentan, Decalin, Toluol, Xylole, Cumol, Mesitylen, Cymole, Chlorbenzol, Chlortoluol, Brombenzol, Dichlorbenzol, Chlorcumol, Ethylbenzol, Diethylbenzol und Gemische dieser Verbindungen. Die Hydrolyse kann jedoch auch in Abwesenheit eines Lösungsmittels, also mit einer CDOP-Schmelze erfolgen.

Die Temperaturen bei der Hydrolyse betragen 60 bis 250°C, vorzugsweise 80 bis 230°C, besonders bevorzugt 100 bis 220°C, ganz besonders bevorzugt 130 bis 210°C. Die Hydrolysetemperatur kann konstant gehalten werden, wird aber bevorzugt kontinuierlich oder in Stufen mit fortschreitender Hydrolyse angehoben.

Der Druck ist nicht besonders kritisch und beträgt in beiden Stufen, jedoch unabhängig voneinander 0,5 bis 50, bevorzugt 0,6 bis 40, besonders bevorzugt 0,8 bis 30 bar.

Die kontinuierliche Hydrolyse wird im allgemeinen so durchgeführt, daß man CDOP und Wasser in dem gewünschten Molverhältnis kontinuierlich in ein Reaktorsystem einspeist, das eine Rückvermischung nicht oder allenfalls nur partiell zuläßt und eine gute Vermischung von CDOP und Wasser gewährleistet.

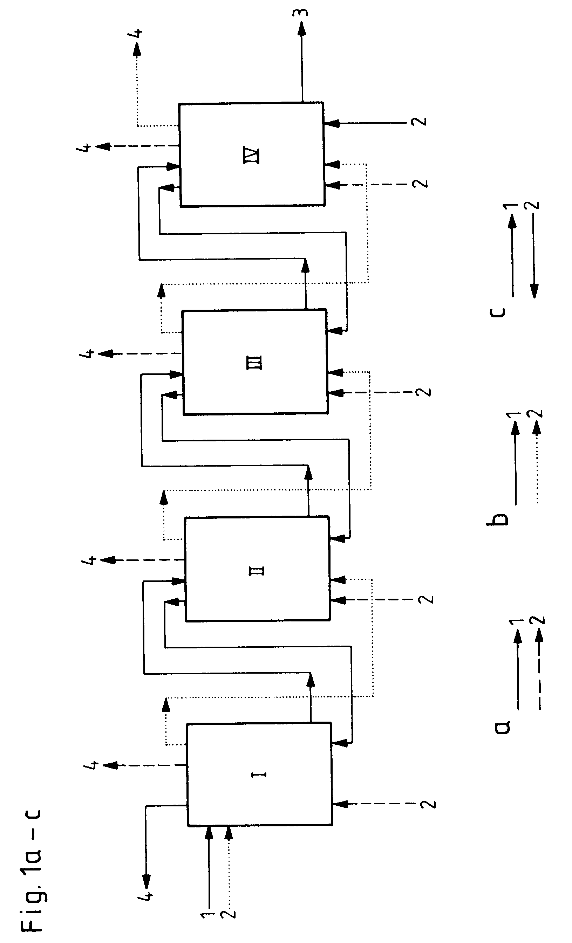

Ein solcher Reaktor kann beispielsweise eine Kaskade von mindestens 2, vorzugsweise 3 bis 5 Rührkesseln sein, in der Wasser entsprechend den berechneten Mengen separat im Querstrom in jeden Kessel eingespeist wird, während CDOP unter Bildung von ODOP als Gesamtmenge nach Eintrag in den ersten Kessel die gesamte Kaskade durchläuft, aber aus jedem Kessel separat gebildetes HCl entweicht (Abb. 1a). Es ist jedoch auch möglich, CDOP in den ersten Kessel einzuleiten und ihm vom letzten her das benötigte Wasser im Gegenstrom entgegenzuschicken, aus dem ersten Kessel gebildetes HCl zu entnehmen und aus dem letzten Kessel ODOP (Abb. 1c). Wasser und CDOP können jedoch auch im Gleichstrom in den ersten Kessel gebracht und nach Umsetzung als HCl- bzw. ODOP-Strom aus dem letzten entnommen werden (Abb. 1b).

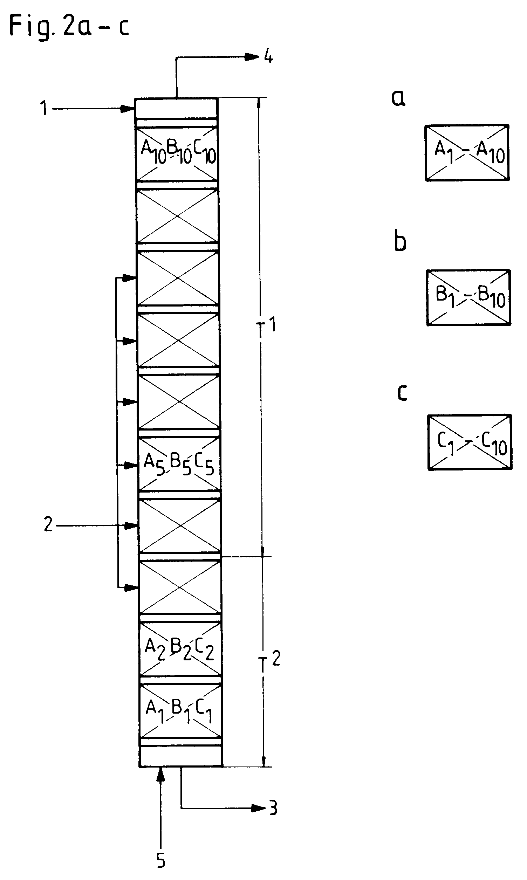

Besonders einfach gestaltet sich die kontinuierliche Hydrolyse in rohrförmigen Reaktoren, beispielsweise in Blasensäulen, von denen mindestens 2, vorzugsweise 3 bis 6 in einer Kaskade angeordnet sind. In diesem Fall sind die gleichen Verfahrensweisen wie in der Rührkesselkaskade möglich, also Gegenstrom-, Gleichstromfahrweise und separate Dosierung von Wasser im Querstrom in jede Blasensäule (Abb. 1a-c). Die Blasensäulen können auch als kaskadierte Blasensäulen in einer Art Kolonne übereinander angeordnet und miteinander verbunden sein, so daß Flüssig- und Gasphase von einer zur anderen Teilblasensäule weiterströmen können (Abb. 2a). Auch hier können die verschiedenen Verfahrensweisen angewandt werden; besonders einfach gestaltet sich aber die Gegenstromfahrweise, wenn CDOP am Kopf und Wasser am Fuß der kaskadierten Blasensäule eingeleitet werden. Die Wasserdosierung kann jedoch entsprechend dem vorliegenden Hydrolysegrad und dem daraus zu ermittelnden Wasserbedarf auf verschiedene Dosierstellen entlang der Kolonne der kaskadierten Blasensäule verteilt werden.

Eine weitere bevorzugte Ausführungsform der Erfindung besteht darin, die Hydrolyse in einer Kolonnenapparatur vorzunehmen, wie sie üblicherweise für destillative Trennoperationen verwendet wird. Im Sinne dieser Erfindung sind das z.B. Kolonnen mit festen Einbauten. Geeignet sind im allgemeinen Bodenkolonnen, z.B. solche mit Sieb-, Glocken-, Ventil-, Tunnel- bzw. Zentrifugalböden, die wiederum in unterschiedlichen Ausführen (Abb. 2b) vorliegen können. Die Kolonnen können jedoch auch Füllkörper und geordnete Packungen enthalten. Die zu verwendenden Füllkörper bzw. geordnete Packungen sind die für Destillationen an sich üblichen, wie sie beispielsweise in Ullmann's Encyclopädie der Technischen Chemie, 4. Auflage, Band 2, S. 528 ff. oder in den Firmenschriften der in Frage kommenden Apparatebaufirmen beschrieben sind. Beispielsweise seien genannt: Raschig- oder Pallringe, Berl-, Intalex- oder Torussättel, Interpackkörper aus verschiedenen Materialien, wie Glas, Steinzeug, Porzellan, Edelstahl, Kunststoff, die insbesondere bei der Verwendung von Metall, gewebe- oder maschenartig verarbeitet sein können. Bevorzugt sind Füllkörper und geordnete Packungen, die eine große Oberfläche, eine gute Benetzung sowie ausreichende Verweilzeiten der Flüssigphase aufweisen; dies sind z.B. Pall- und Novolaxringe, Berlsättel, BX-Packungen, Montz-Pak, Mellapak, Kerapak und CY-Packungen. Auch bei diesen Ausführungsformen in einer Reaktionskolonne (Abb. 2c) können die verschiedenen Verfahrensweisen der Gleich-, Gegenstromfahrweise und der geteilten Wasserdosierung im Querstrom angewendet werden. Bevorzugt sind jedoch die Gegenstromfahrweise und die Fahrweise mit geteilter Dosierung von Wasser entsprechend dem Bedarf an verschiedenen Stellen der Kolonne.

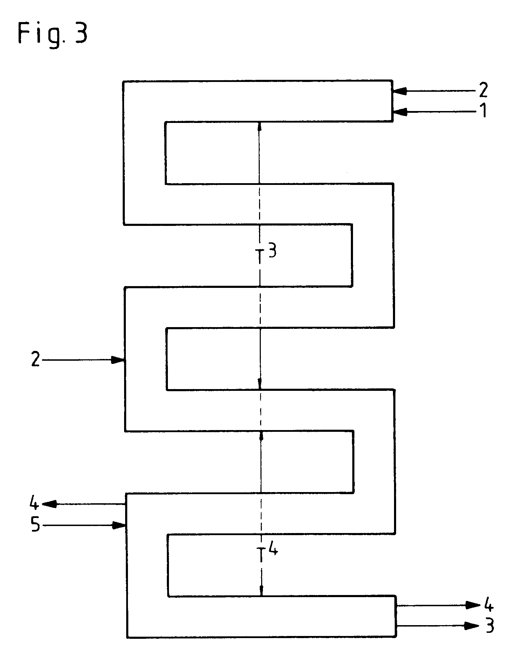

Eine weitere bevorzugte Ausführungsform des erfindungsgemäßen Verfahrens besteht in der Verwendung von einfachen Rohrreaktoren (Abb. 3), in denen statische Mischelemente für eine gute Durchmischung von CDOP und Wasser sorgen. Solche Mischelemente sind beispielsweise in Ullmann's Encyclopädie 5.th Ed. Vol. B2: S. 25-12 und 26-9 und Vol. B4: S. 568-570 beschrieben. In solchen Rohrreaktoren muß eine Mindestströmungsgeschwindigkeit vorherrschen, damit die Mischung der Edukte bewirkt werden kann. Die erforderlichen Daten sind vom Fachmann leicht zu ermitteln. Die Rohrreaktoren können sowohl in senkrechter wie waagerechter Lage oder in gewundener Form, beispielsweise Schlangen-, Schnecken oder Schraubenform betrieben werden. Dabei kann Wasser auch an verschiedenen Stellen des Rohres entsprechend dem Bedarf zudosiert werden.

Bei Normal- oder Überdruck werden vorzugsweise senkrecht stehende oder schlangen- bzw. schnecken- oder schraubenförmig gestaltete Reaktoren so betrieben, daß die Edukte am unteren Ende des Reaktors eingespeist und am oberen Ende die Produkte entnommen werden. Jedoch können die Reaktoren auch im umgekehrter Richtung von oben nach unten betrieben werden. Vorzugsweise wird unter einem Überdruck von 0,5 bis 20 bar gearbeitet. Bei Druckfahrweise wird das Reaktionsgemisch kontinuierlich in einen Behälter hinein entspannt und HCl von ODOP getrennt, das am Boden des Entspannungsgefäßes abfließt, während HCl über eine Kühleinrichtung oben abgezogen wird (Abb. 3).

In allen beschriebenen Fällen ist es zweckmäßig und vorteilhaft, das fertige Reaktionsgemisch nach Abtrennen von HCl noch einer Behandlung bei höherer Temperatur zu unterwerfen. Eine Einrichtung hierzu kann beispielsweise ein Rührkessel, eine Blasensäule, eine Reaktionskolonne oder ein einfaches Rohr mit Mischelementen sein. Derartige Apparate können separat von den kontinuierlichen Hydrolyseeinrichtungen stehen oder aber in diese integriert sein. So kann z.B. der letzte Kessel oder die letzte Blasensäule einer Kaskade diese Aufgabe erfüllen. Als erhöhte Temperatur gilt der bis zur oben genannten Obergrenze, beispielsweise der Bereich von 130-250°C, bev. 150-180°C. In Kolonnenreaktoren wird man diese Operation zweckmäßig im unteren Teil durchführen und dort die Temperatur erhöhen, wie es z.B. in Abb. 2 angedeutet ist. Die dort genannten Temperaturbereiche sind nicht bindend, sondern lediglich als möglich angegeben. Dies gilt gleichermaßen für die Temperaturwerte und die damit verbundene Nutzung der letzten Wegstrecke des Rohres in Abb. 3.

Die Mitverwendung eines inerten Gases ist oft vorteilhaft und ebenso beispielhaft in Abb. 2 und 3 angezeigt. Inerte Gase sind beispielsweise Stickstoff; Kohlendioxid, Helium, Wasserstoff; Methan und andere niedrig siedende Kohlenwasserstoffe.

In den Figuren 1a-c, 2a-c und 3 bedeuten die Bezugsziffern Stoffströme oder Apparateteile, wobei gleiche Ziffern stets die gleiche Bedeutung haben: 1 = CDOP; 2 = H₂O; 3 = ODOP; 4 = HCl; 5 = Inertgas; I bis IV = einzelne Rührkessel oder Blasensäulen einer Kaskade (in Fig. 1a-c beispielhaft mit 4 Einzelapparaten dargestellt); A₁ bis A₁₀ = Teilblasensäulen einer kaskadierten Blasensäule; B₁ bis B₁₀ = Böden einer Bodenkolonne; C₁ bis C₁₀ = Füllkörper- oder Packungselemente einer gepackten Kolonne (A bzw. B bzw. C beispielhaft als jeweils 10 Apparateelemente dargestellt); T¹ = (beispielhaft) Temperaturbereich 100 bis 150°C; T² = (beispielhaft) Temperaturbereich 150 bis 180°C (kann jedoch höher sein); T³ = (beispielhaft) Temperaturbereich 120 bis 160°C; T⁴ = (beispielhaft) Temperaturbereich 160 bis 200°C (kann jedoch höher sein). Fig. 1a mit gestrichelten Linien für die H₂O-Zufuhr und HCl-Abnahme stellt eine Querstrom-Fahrweise dar; Fig. 1b mit punktierten Linien für die H₂O-Zufuhr und HCl-Abnahme stellt eine Gleichstrom-Fahrweise dar; Fig. 1c mit durchgezogenen Linien für die H₂O-Zufuhr und HCl-Abnahme stellt eine Gegenstrom-Fahrweise dar; Fig. 2a stellt eine kaskadierte Blasensäule dar; Fig. 2b stellt eine Bodenkolonne dar; Fig. 2c stellt eine gepackte Kolonne dar. Fig. 3 stellt ein (beispielhaft gewendeltes) Reaktionsrohr dar, das Einbauten und Mischelemente enthalten kann (nicht eingezeichnet).

Als unterdrückte Rückvermischung im Sinne der Erfindung wird die unterdrückte Vermischung von CDOP mit dem hydrolysierten Produkt, also ODOP, verstanden. Eine solche Rückvermischung soll möglichst vermieden werden, damit die Reaktionsstrecke kurz sein kann und das Produkt sauber bleibt. Eine Rückvermischung läßt sich dadurch vermeiden, daß man den ungehinderten Fluß von Edukt und Produkt im Reaktor vermindert und dem Reaktionsgemisch durch getrennte Reaktorteile, z.B. Kessel oder Blasensäule in der Kaskade, Böden in einer Kolonne oder Mischelemente im Rohr eine Vorzugsrichtung zum Ausgang des Reaktors aufprägt und wohl Querströmungen zwecks Vermischung von CDOP und H₂O, aber keine Rückströmung zum Reaktoreintritt zuläßt. Die obengenannten Reaktorsysteme sind in Ullmann's Encyclopedia 5.th Ed. Vol. B4, S. 181-198 (Rohrreaktoren), S. 275-307 (Blasensäulen), S. 321-328 (Reaktionskolonnen) näher erläutert.

### Beispiel

In einer beheizbaren Kolonne von ca. 30 mm Durchmesser und einer Länge von ca. 150 cm, die mit Raschigringen gefüllt und mit einem in Zonen aufgeteilten Heizmantel versehen ist, pumpte man am Kopf 586 g (2,50 Mol) CDOP pro h ein und schickte diesem Strom Wasserdampf von 150 bis 160°C in einer Menge von 51 g (2,83 Mol) pro h entgegen. Dieser Dampfstrom wurde auf 2 Dosierstellen, nämlich etwa 50 cm und ca. 100 cm vom Kopf der Kolonne abwärts gemessen, je etwa hälftig aufgeteilt. Die Kolonne wurde über eine Mantelheizung mit Wärmeträgeröl temperiert, der obere Teil auf 125 bis 135°C, der mittlere auf 150 bis 160°C und der untere auf 170 bis 180°C. Am Boden der Kolonne trat ein Stickstoffstrom von ca. 10 l/h ein. Nachdem die Kolonne etwa 2 h betrieben worden war, wurde das am Boden sich sammelnde Produkt, eine fast farblose Schmelze, kontinuierlich abgelassen und stündlich ausgewogen:

| | |
|---|---|
| 1. Std. | 549 g |
| 2. Std. | 533 g |
| 3. Std. | 539 g |
| 4. Std. | 552 g |
| 5. Std. | 531 g; Σ 2704 g, das sind 12,52 Mol ODOP. |

Zudosiert wurden in dieser Zeit insgesamt 2966 g, das sind 12,65 Mol CDOP. Danach betrug die Ausbeute ca. 99 % der theoretischen Ausbeute. Das erhaltene Produkt (ODOP) hatte einen Schmelzpunkt von 116 bis 117°C, einen Gehalt von 99,8 % und einen Chlorgehalt von ca. 70 bis 90 ppm. Der am Kopf der Kolonne entweichende Chlorwasserstoff wurde durch einen Intensivkühler geleitet und von mitgerissenem CDOP befreit, das in die Kolonne zurückfloß. Bei großen Raum-Zeit-Ausbeuten (RZA) von etwa 0,6 bis 0,7 kg Produkt pro 1 Reaktionsraum und h, die noch erhöht werden kann, erhält man ein sehr reines Produkt.

### Zum Vergleich:

Gemäß Beispiel 2 von EP 632 050 wird eine RZA = 0,28 kg/l·h erzielt und ein Produkt mit einem Cl-Gehalt von 800 ppm erhalten.
Gemäß Beispiel 1 von EP 632 050 wird eine RZA = 0,032 kg/l·h erzielt.

## Patentansprüche

1. Verfahren zur Herstellung von 6-Oxo-(6H)-dibenz-[c,e][1,2]-oxaphosphorinen (ODOP) der Formel 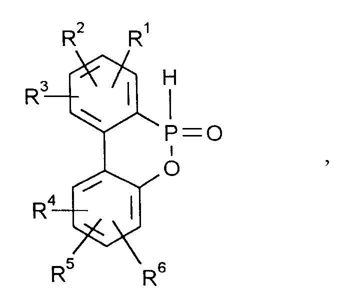 worin
R¹ bis R⁶ gleich oder verschieden sind und Wasserstoff; Halogen, C₁-C₄-Alkyl oder C₁-C₄-Alkoxy bedeuten,
durch Umsetzen von o-Phenylphenolen der Formel 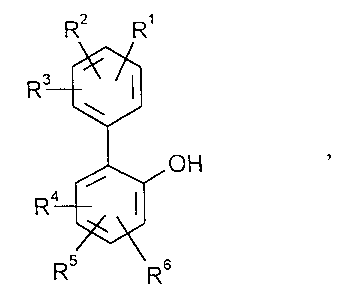 worin
R¹ bis R⁶ die oben angegebene Bedeutung haben,
in einer 1. Stufe mit Phosphortrichlorid in Gegenwart von Lewissäuren unter Abspalten von Chlorwasserstoff bei erhöhter Temperatur im Bereich von 70 bis 220°C und Hydrolyse des Produkts der 1. Stufe in einer 2. Stufe, dadurch gekennzeichnet, daß man zur Hydrolyse CDOP und Wasser in mindestens stöchiometrischem Molverhältnis kontinuierlich bei erhöhter Temperatur in eine Reaktionsstrecke mit möglichst geringer Rückvermischung einspeist, entlang dieser Reaktionsstrecke bei erhöhter Temperatur die Hydrolyse kontinuierlich durchführt, die Reaktionsprodukte am Ende der Strecke kontinuierlich austrägt und ODOP gegebenenfalls einer Nachbehandlung bei erhöhter Temperatur unterwirft.

2. Verfahren nach Anspruch 1, dadurch gekennzeichnet, daß o-Phenylphenole eingesetzt werden, in denen zwei der Reste R¹ bis R⁶ Wasserstoff bedeuten.

3. Verfahren nach Anspruch 2, dadurch gekennzeichnet, daß o-Phenylphenole eingesetzt werden, in denen vier der Reste R¹ bis R⁶ Wasserstoff bedeuten.

4. Verfahren nach Anspruch 3, dadurch gekennzeichnet, daß das nicht substituierte o-Phenylphenol eingesetzt wird.

5. Verfahren nach Anspruch 1, dadurch gekennzeichnet, daß eine Gesamtmenge an H₂O von 1 bis 2 Mol, bevorzugt 1 bis 1,7 Mol, besonders bevorzugt 1 bis 1,5 Mol pro Mol CDOP eingesetzt wird.

6. Verfahren nach Anspruch 1, dadurch gekennzeichnet, daß die Hydrolyse bei einer Temperatur von 60 bis 250°C, bevorzugt 80 bis 230°C, besonders bevorzugt 100 bis 220°C, ganz besonders bevorzugt 130 bis 210°C durchgeführt wird.

7. Verfahren nach Anspruch 1, dadurch gekennzeichnet, daß in beiden Stufen, jedoch unabhängig voneinander, bei Drücken von 0,5 bis 50 bar, bevorzugt 0,6 bis 40 bar, besonders bevorzugt bei 0,8 bis 30 bar gearbeitet wird.

8. Verfahren nach Anspruch 1, dadurch gekennzeichnet, daß das fertige Reaktionsgemisch nach der Abtrennung von HCl einer Behandlung bei erhöhter Temperatur im Bereich von 160 bis 250°C unterworfen wird.
